# EUROPÄISCHE PATENTSCHRIFT

(11) **EP 2 593 807 B1**
(45) Veröffentlichungstag und Bekanntmachung des Hinweises auf die Patenterteilung: **12.07.2017**
(21) Anmeldenummer: 11733669.3
(22) Anmeldetag: 13.07.2011
(51) Int. Cl.: G01S 3/30, G01S 5/00, G08G 1/16

(54) **VERFAHREN UND SYSTEM ZUR VALIDIERUNG EINER FAHRZEUG-ZU-X- BOTSCHAFT SOWIE VERWENDUNG DES VERFAHRENS**
METHOD AND SYSTEM FOR VALIDATING A VEHICLE-TO-X MESSAGE AND USE OF THE METHOOD
PROCÉDÉ ET SYSTÈME POUR VALIDER UN MESSAGE DE VÉHICULE À X ET UTILISATION DE CE PROCÉDÉ

(30) Priorität: 16.07.2010 DE 102010031466
(43) Veröffentlichungstag der Anmeldung: 22.05.2013
(73) Patentinhaber: Continental Teves AG & Co. oHG, 60488 Frankfurt (DE)
(72) Erfinder: STÄHLIN, Ulrich, 65670 Eschborn (DE); MENZEL, Marc, 35043 Marburg (DE)
(74) Vertreter: Wagner, Philipp
(86) Internationale Anmeldenummer: PCT/EP2011/061923
(87) Internationale Veröffentlichungsnummer: WO 2012/007491

(56) Entgegenhaltungen:
- EP-A1- 2 136 222
- DE-A1-102010 029 744
- US-A1- 2009 271 112

## Beschreibung

Die Erfindung betrifft ein Verfahren gemäß Oberbegriff von Anspruch 1 und ein System gemäß Oberbegriff von Anspruch 11. Die zunehmend schnell voranschreitende Entwicklung im Bereich unterschiedlicher Fahrzeug-zu-X-Kommunikationssysteme und -Technologien bietet eine Vielzahl neuer Möglichkeiten, um Risiken und Gefährdungssituationen im Straßenverkehr zu verringern oder sogar vollständig zu vermeiden. Darüber hinaus ist es bekannt, Fahrzeug-zu-X-Kommunikationssysteme zur Erhöhung des Fahrkomforts zu nutzen, beispielsweise im Rahmen eines Ampelphasen-Assistenten, oder auch für kommerzielle Anwendungen und zu Unterhaltungszwecken für die Mitfahrer. Ein mit dieser Entwicklung einhergehendes Problem stellt das Sicherstellen der notwendigen Datenauthentizität der übermittelten Fahrzeug-zu-X-Informationen dar, da diese Informationen auch als Grundlage für autonome Eingriffe in die Fahrzeugsteuerung genutzt werden können. Eine falsche oder schlimmstenfalls sogar gefälschte Fahrzeug-zu-X-Information kann daher schwerwiegende Folgen haben und muss zuverlässig als nicht vertrauenswürdig erkannt werden.

In diesem Zusammenhang offenbart die DE 10 2011 077998 A1 ein Verfahren zur Informationsvalidierung einer Fahrzeug-zu-X-Botschaft mittels Umfeldsensorik. Der Informationsinhalt einer Fahrzeug-zu-X-Information kann dabei selbst dann zuverlässig validiert werden, wenn die Umfeldsensoren den von der Fahrzeug-zu-X-Information beschriebenen Informationsinhalt nur kurzfristig und mit starken Unterbrechungen erfassen können. Somit können Fahrzeug-zu-X-Informationen mit großer Zuverlässigkeit validiert bzw. als nicht ausreichend vertrauenswürdig verworfen werden. Sofern die Fahrzeug-zu-X-Informationen nach dem in der DE 10 2011 077998 A1 vorgeschlagenen Verfahren validiert werden, weisen sie einen ausreichend hohen Zuverlässigkeitsgrad für einen Eingriff in die Fahrzeugsteuerung aus. Dieser Eingriff kann sogar derart ausgebildet sein, dass eine Fahrereingabe übersteuert wird. Eine gesonderte und aufwändige Überprüfung einer evtl. in der Fahrzeug-zu-X-Information enthaltenen Datensicherheitsstruktur ist somit nicht notwendig.

Die DE 10 2007 030 430 A1 beschreibt ein Verfahren zur Übertragung von fahrzeugrelevanten Informationen in und aus einem Fahrzeug. Über eine "Transmission Control Unit" (TCU) werden von unterschiedlichen Kommunikationsmitteln (z.B. Mobilfunk oder WLAN) empfangene Informationen ausgewertet und anschließend an im Fahrzeug mitgeführte mobile Endgeräte übertragen. Die TCU kann dabei ein "Security Modul" umfassen, welches eine Kommunikation und einen Datenaustausch mit außerhalb des Fahrzeugs befindlichen Sendern in sicherer Form erlaubt. Dazu werden sowohl die zu übertragenden als auch die empfangenen Informationen gespeichert und überwacht. Zugriffe auf die Informationen von außen werden abgewehrt. Zusätzlich wird die Möglichkeit beschrieben, die Daten verschlüsselt zu übertragen.

Des Weiteren sind aus der DE 10 2010 029 744 A1 ein Verfahren zur Positionierung und eine Fahrzeug-Kommunikationseinheit bekannt. Die Fahrzeug-Kommunikationseinheit ist zur Kommunikation mit anderen Fahrzeugen oder Infrastruktureinrichtungen vorgesehen und nutzt einen WLAN-basierten Kommunikationsstandard. Um die Position eines Kommunikationsteilnehmers zu bestimmen, sendet ein erster Kommunikationsteilnehmer einen Abfrageimpuls aus, welcher von einem zweiten Kommunikationsteilnehmer empfangen und mit einem Antwortimpuls beantwortet wird. Der erste Kommunikationsteilnehmer empfängt den Antwortimpuls und errechnet aus der Laufzeit beider Impulse den Abstand zum zweiten Kommunikationsteilnehmer. Die Winkellage des zweiten Kommunikationsteilnehmers zum ersten Kommunikationsteilnehmer wird aus dem Phasenversatz des einlaufenden Antwortimpulses zwischen einzelnen Antennenabschnitten einer Mehrfeldantenne der Fahrzeug-Kommunikationseinheit ermittelt. Zum Ermitteln des Phasenversatzes ist eine spezielle Mehrfeldantenne mit mehreren getrennten Antennenabschnitten notwendig. Dies erlaubt die Bestimmung der relativen Position des zweiten Kommunikationsteilnehmers zum ersten Kommunikationsteilnehmer.

Die aus dem Stand der Technik im Zusammenhang mit Fahrzeug-zu-X-Kommunikation bekannten Datensicherheitsvorkehrungen sind aus verschiedenen Gründen nachteilbehaftet. So müssen Fahrzeug-zu-X-Botschaften entweder wegen der hohen Datensicherheitsanforderungen aufwendig signiert bzw. verschlüsselt werden, wodurch sehr leistungsfähige, dedizierte Hardware zur Kodierung und anschließenden Dekodierung erforderlich wird. Diese Hardware wiederum ist mit entsprechend hohem Kostenaufwand verbunden, was derartige Lösungen unattraktiv macht. Oder aber es findet eine Überprüfung des Informationsinhalts der empfangenen Fahrzeug-zu-X-Botschaften mittels Umfeldsensoren statt. In diesem Fall kann zwar die rechenintensive Dekodierung der Datensicherheitsstruktur bei diesen Fahrzeug-zu-X-Botschaften entfallen, da die Informationen auf anderem Wege validiert werden können. Allerdings ist es aufgrund der unterschiedlichen Wirkprinzipien der Kommunikationseinrichtung und der Umfeldsensoren, der Ausrichtung der Umfeldsensoren oder schlicht wegen des Fehlens von Umfeldsensoren oftmals nicht möglich, eine Fahrzeug-zu-X-Botschaft auf diesem Weg zu überprüfen. Ein auf Fahrzeug-zu-X-Kommunikation basierendes Positionsbestimmungsverfahren gemäß der DE 10 2010 029 744 A1 kann verwendet werden, um die Position eines Kommunikationsteilnehmers analog zu einer Positionsbestimmung mittels Umfeldsensorik zu erfassen. Diese Information könnte theoretisch verwendet werden, um mittels eines Abgleichs mit einer in einer Fahrzeug-zu-X-Botschaft desselben Senders enthaltenen Positionsinformation die von diesem Sender ausgehenden Fahrzeug-zu-X-Botschaften zu validieren oder zu verwerfen. Ein derartiges Verfahren ist aus dem Stand der Technik jedoch nicht bekannt. Zudem benötigt die in der DE 10 2010 029 744 A1 beschriebene Kommunikationseinheit eine aufwändige Antennenanordnung mit vergleichsweise großem Abstand der einzelnen Antennenabschnitte zueinander, da ansonsten die Phasendifferenzen nicht genau genug aufgelöst werden können. Zusätzlich ist es zwingend erforderlich, dass ein Kommunikationsteilnehmer einen Antwortpuls sendet, wodurch sich einem böswilligen Sender durch Nicht-Senden des Antwortpulses die Möglichkeit bietet, seine Überprüfung zu verhindern. Aus der US 2009/271112 A1 ist ein Kommunikationssystem bekannt, welches eine Validierung einer empfangenen Fahrzeug-zu-X-Botschaft mittels eines Vergleichs einer in der empfangenen Fahrzeug-zu-X-Botschaft enthaltenen Position mit ebenfalls in der Fahrzeug-zu-X-Botschaft enthaltenen GPS-Rohdaten ermöglicht. Aus der EP 2 136 222 A1 ist ein Verfahren zur Validierung von empfangenen Positionsdaten für Überwachungsanwendungen von Flugzeugen bekannt.
Der Erfindung liegt daher die Aufgabe zugrunde, ein Verfahren bzw. ein System vorzuschlagen, welches eine Validierung einer Fahrzeug-zu-X-Botschaft mittels eines auf Fahrzeug-zu-X-Kommunikation basierenden Positionsbestimmungsverfahren unter Vermeidung der aus dem Stand der Technik bekannten Nachteile ermöglicht.

Diese Aufgabe wird erfindungsgemäß durch das Verfahren zur Validierung einer Fahrzeug-zu-X-Botschaft gemäß Anspruch 1 und das System zur Validierung einer Fahrzeug-zu-X-Botschaft gemäß Anspruch 11 gelöst.

Gemäß dem erfindungsgemäßen Verfahren zur Validierung einer Fahrzeug-zu-X-Botschaft, bei dem die Fahrzeug-zu-X-Botschaft von einer mindestens zwei Antennenglieder aufweisenden Antennenanordnung einer Fahrzeug-zu-X-Kommunikationseinrichtung empfangen wird, wird eine elektromagnetische Feldstärke der Fahrzeug-zu-X-Botschaft aufgrund unterschiedlicher Empfangscharakteristiken der mindestens zwei Antennenglieder von den mindestens zwei Antennengliedern mit unterschiedlichen Leistungsdichten aufgenommen. Die Fahrzeug-zu-X-Botschaft umfasst eine absolute Position eines Senders, während eine absolute Position eines Empfängers auf Basis eines globalen Satellitennavigationsverfahrens und/oder auf Basis eines Kartenabgleichs bestimmt wird. Aus der absoluten Position des Empfängers und der absoluten Position des Senders wird eine erste relative Position des Senders zum Empfänger errechnet. Das erfindungsgemäße Verfahren zeichnet sich dadurch aus, dass empfängerseitig aus dem Verhältnis der von den mindestens zwei Antennengliedern der Antennenanordnung aufgenommenen Leistungsdichten eine zweite relative Position des Senders zum Empfänger errechnet oder aus einem Referenzkennfeld ausgelesen wird, wobei ein Vergleich der ersten relativen Position mit der zweiten relativen Position durchgeführt wird und bei Erkennen auf weitestgehende Übereinstimmung der ersten relativen Position mit der zweiten relativen Position die Fahrzeug-zu-X-Botschaft validiert wird und/oder bei Erkennen auf weitestgehende Abweichung der ersten relativen Position von der zweiten relativen Position die Fahrzeug-zu-X-Botschaft verworfen wird. Somit ergibt sich der Vorteil, dass auf einfache Art und Weise eine Validierung bzw. ein Verwerfen der Fahrzeug-zu-X-Botschaft direkt über die physikalischen, nicht verfälschbaren Eigenschaften der Fahrzeug-zu-X-Botschaft möglich ist. Das erfindungsgemäße Verfahren ist jederzeit und unter allen Bedingungen, in denen eine Fahrzeug-zu-X-Botschaft empfangen wird, durchführbar, da keine zusätzlichen Umfeldsensoren zur Überprüfung des Informationsinhalts benötigt werden. Stattdessen findet die Überprüfung der Zuverlässigkeit ausschließlich auf Basis der aufgenommenen Feldstärken der Fahrzeug-zu-X-Botschaft statt, welche zwingendermaßen beim Empfang der Fahrzeug-zu-X-Botschaft zur Verfügung stehen. Ein bewusstes Fälschen einer Positionsangabe oder auch weiterer Inhalte der Fahrzeug-zu-X-Botschaft durch einen böswilligen Sender kann somit jederzeit zuverlässig erkannt werden. Speziell sog. Replay-Attacken, bei denen eine echte Warnmeldung, bspw. vor einem Stauende, mittels eines geeigneten Empfängers aufgenommen wird und später, nach Auflösen des Staus, von einer anderen Position aus erneut abgespielt wird, können so erkannt werden. Ein weiterer Vorteil des erfindungsgemäßen Verfahrens ergibt sich im Rahmen einer Vorprüfung bzw. Vorsortierung einer an sich bekannten Datenauthentizitätsprüfung, da hier z.B. nur noch Fahrzeug-zu-X-Botschaften überprüft werden müssen, die über das erfindungsgemäße Verfahren bereits validiert wurden. Dies kann die benötigte, gewöhnlich sehr hohe Rechenleistung für eine an sich bekannte Datenauthentizitätsprüfung reduzieren.

Bevorzugt ist es vorgesehen, dass die Empfangscharakteristiken der mindestens zwei Antennenglieder von einem Richtungswinkel des Empfängers zum Sender geprägt sind. Da die Empfangscharakteristiken die aufgenommene Leistungsdichte bestimmen, ergibt sich somit auf einfache Weise aus dem Verhältnis der aufgenommenen Leistungsdichten eine Richtungsinformation.

In einer weiteren bevorzugten Ausführungsform ist es vorgesehen, dass aus dem Verhältnis der von den mindestens zwei Antennengliedern aufgenommenen Leistungsdichten der Richtungswinkel des Empfängers zum Sender errechnet wird oder aus einem Referenzkennfeld ausgelesen wird und wobei weiterhin aus dem Verhältnis der von den mindestens zwei Antennengliedern aufgenommenen Leistungsdichten unter Berücksichtigung des Richtungswinkels des Empfängers zum Sender die Entfernung des Empfängers zum Sender errechnet wird oder aus einem Referenzkennfeld ausgelesen wird. Die Position des Senders wird somit in zwei Schritten berechnet bzw. aus geeigneten Referenzkennfeldern bestimmt. Dabei wird berücksichtigt, dass der Unterschied in den aufgenommenen Leistungsdichten aus zwei verschiedenen Gründen verursacht wird: Zum einen durch die vom Richtungswinkel abhängigen Empfangscharakteristiken, zum anderen durch den unterschiedlichen Abstand verschiedener Antennenglieder zum Sender. Der unterschiedliche Abstand beeinflusst die aufgenommene Leistungsdichte dabei im Wesentlichen nur minimal, während die Empfangscharakteristiken einen vergleichsweise starken Einfluss haben. Aus diesem Grund findet zuerst eine Richtungsbestimmung unter Vernachlässigung der durch den unterschiedlichen Abstand hervorgerufenen Leistungsdichten statt. Aufgrund der im Wesentlichen nur minimalen Beeinflussung durch die unterschiedlichen Abstände ist dies vergleichsweise gut möglich. Wenn der Richtungswinkel bekannt ist, kann anschließend die richtungswinkelabhängige Empfangscharakteristik aus den unterschiedlichen Leistungsdichten herausgerechnet werden, so dass sich aus dem verbleibenden Verhältnis der Abstand bestimmen lässt.

Vorzugsweise zeichnet sich das Verfahren dadurch aus, dass das Referenzkennfeld eine Vielzahl von Verhältnissen der aufgenommenen Leistungsdichten in den mindestens zwei Antennengliedern in Abhängigkeit einer Vielzahl von Richtungswinkeln und Entfernungen des Empfängers zum Sender umfasst. Somit muss die zweite relative Position des Senders nicht errechnet werden, sondern kann aus einem vorgegebenen Referenzkennfeld ausgelesen werden. Das Referenzkennfeld kann dabei an die individuellen Empfangs- bzw. Sendeeigenschaften der Fahrzeug-zu-X-Kommunikationseinrichtung bzw. des Gesamtsystems angepasst sein.

Gemäß einer weiteren bevorzugten Ausführungsform der Erfindung ist es vorgesehen, dass absolute Positionen und/oder relative Positionen und/oder Geschwindigkeiten und/oder Bewegungsrichtungen einer Vielzahl von sich in Sendereichweite zum Empfänger befindlichen Sendern bestimmt werden, wobei insbesondere ein Umfeldmodell der Sender erstellt wird. Ein Umfeldmodell der in der Nähe befindlichen Sender bzw. Fahrzeuge enthält eine Vielzahl vergleichsweise wichtiger Informationen für unterschiedliche Fahrerassistenzsysteme, bspw. zum Beurteilen von Verkehrssituationen. Zudem bietet sich der weitere Vorteil, dass ein Umfeldmodell ohne die Verwendung bzw. ohne das Vorhandensein von Umfeldsensoren erstellt werden kann.

Zweckmäßigerweise ist es vorgesehen, dass die ersten relativen Positionen und die zweiten relativen Positionen einer Vielzahl von sich in Sendereichweite zum Empfänger befindlichen Sendern in Relation gesetzt werden und zu einer Bildung eines statistischen mittleren Verhaltens herangezogen werden und wobei Fahrzeug-zu-X-Botschaften mit einem mit dem statistischen mittleren Verhalten weitestgehend übereinstimmenden Verhalten validiert werden und/oder Fahrzeug-zu-X-Botschaften mit einem vom statistischen mittleren Verhalten weitestgehend abweichenden Verhalten verworfen werden. Indem davon ausgegangen wird, dass der größte Teil der Sender Fahrzeug-zu-X-Botschaften mit korrektem Inhalt versendet, kann die Genauigkeit des erfindungsgemäßen Verfahrens weiter verbessert werden. Die jeweils in den Fahrzeug-zu-X-Botschaften enthaltenen, absoluten Positionen werden mit den Verhältnissen der aufgenommenen Leistungsdichten in Relation gesetzt. Es ergibt sich somit ein statistisches Mittel aus der Relation von absoluten bzw. relativen Positionen und dem Verhältnis der aufgenommenen Leistungsdichten. Unter der getroffenen Voraussetzung, dass der größte Teil der Sender inhaltlich korrekte Fahrzeug-zu-X-Botschaften versendet, stellt das statistische Mittel eine weitere Größe dar, anhand derer eine Validierung bzw. Verwerfung einer empfangenen Fahrzeug-zu-X-Botschaft vorgenommen werden kann. Sender, die vom statistischen Mittel abweichen, legen nahe, dass sie falsche Positionsinformationen senden. Zudem ergibt sich der Vorteil, dass durch diesen Verfahrensschritt auch der Einfluss von Umwelt- und Störgrößen verringert werden kann, welche das Empfangsverhalten der Antennenanordnung beeinflussen können.

Außerdem ist es vorteilhaft, dass ein zeitlicher Verlauf der unterschiedlichen Leistungsdichten ausgewertet wird. Daraus ergibt sich der Vorteil einer genaueren Positionsbestimmung, da das Verfahren mit jedem erneuten Empfangsvorgang einer weiteren Fahrzeug-zu-X-Botschaft desselben Senders eine genauere Positionsbestimmung vornehmen kann. Sofern sich der Sender und der Empfänger dabei relativ zueinander bewegen, kann die Positionsbestimmung nochmals verbessert werden, da die Fahrzeug-zu-X-Botschaft in diesem Fall von jeweils unterschiedlichen relativen Positionen empfangen wird, was ein Bewerten und Vergleichen der unterschiedlichen Verhältnisse der diesen Positionen entsprechenden, aufgenommenen Leistungsdichten erlaubt.

Insbesondere ist es vorteilhaft, dass aus dem zeitlichen Verlauf eine Bewegungsrichtung und/oder eine Geschwindigkeit des Senders errechnet wird. Dies sind zusätzliche, direkt aus den sich ändernden Sendepositionen des Senders bestimmbare Parameter, welche mit den in der Fahrzeug-zu-X-Botschaft enthaltenen, entsprechenden Parametern verglichen werden können. Somit kann die Validierung einer empfangenen Fahrzeug-zu-X-Botschaft noch zuverlässiger ausgeführt werden.

Außerdem ist es vorteilhaft, dass ein Informationsinhalt einer validierten Fahrzeug-zu-X-Botschaft mindestens einem Fahrerassistenzsystem zur Verfügung gestellt wird, wobei das mindestens eine Fahrerassistenzsystem zur Bewarnung eines Fahrers und/oder zum Eingreifen in die Fahrzeugsteuerung und/oder zum Übersteuern einer Fahrervorgabe ausgebildet ist. Daraus ergibt sich der Vorteil, dass der Informationsinhalt der validierten Fahrzeug-zu-X-Botschaften zur Abwendung von Gefahrensituationen und ggf. sogar zur Unfallvermeidung ohne Mitwirken des Fahrers bzw. entgegen einer Steuereingabe des Fahrers verwendet werden können.

Weiterhin ist es bevorzugt, dass anstelle eines Vergleichs der ersten relativen Position mit der zweiten relativen Position ein Vergleich der von der Fahrzeug-zu-X-Botschaft umfassten absoluten Position des Senders mit einer aus der absoluten Position des Empfängers und der zweiten relativen Position des Senders zum Empfänger errechneten absoluten Position des Senders durchgeführt wird. Da erfindungsgemäß ohnehin die absoluten Positionen bekannt sind und die relativen Positionen errechnet werden, entsteht kein zusätzlicher Rechenaufwand. Dies stellt eine alternative Möglichkeit zur zuverlässigen Validierung einer empfangenen Fahrzeug-zu-X-Botschaft dar und führt somit zu den bereits geschilderten Vorteilen des erfindungsgemäßen Verfahrens.

Die vorliegende Erfindung betrifft weiter ein System zur Validierung einer Fahrzeug-zu-X-Botschaft, welches insbesondere zur Ausführung des erfindungsgemäßen Verfahrens geeignet ist. Das System umfasst eine Fahrzeug-zu-X-Kommunikationseinrichtung zum Empfangen und Versenden von Fahrzeug-zu-X-Botschaften, wobei der Fahrzeug-zu-X-Kommunikationseinrichtung eine mindestens zwei Antennenglieder aufweisende Antennenanordnung zugeordnet ist und wobei jedes Antennenglied gegenüber dem Sender unterschiedliche Empfangscharakteristiken aufweist. Aufgrund der unterschiedlichen Empfangscharakteristiken nimmt jedes Antennenglied eine elektromagnetische Feldstärke einer einlaufenden Fahrzeug-zu-X-Botschaft mit unterschiedlichen Leistungsdichten auf. Weiterhin umfasst das System Auslesemittel zum Auslesen einer absoluten Position eines Senders aus einer empfangenen Fahrzeug-zu-X-Botschaft, Positionsbestimmungsmittel auf Basis eines globalen Satellitennavigationssystems und/oder auf Basis eines Kartenabgleichs zum Bestimmen einer absolute Position eines Empfängers und erste Positionserrechnungsmittel zum Errechnen einer ersten relativen Position des Senders zum Empfänger aus der absoluten Position des Empfängers und der absoluten Position des Senders. Das erfindungsgemäße System zeichnet sich dadurch aus, dass zweite Positionserrechnungsmittel aus dem Verhältnis der einlaufenden elektromagnetischen Feldstärken der Fahrzeug-zu-X-Botschaft in unterschiedlichen Gliedern der Antennenanordnung eine zweite relative Position des Senders zum Empfänger errechnen oder aus einem Referenzkennfeld auslesen und Vergleichsmittel einen Vergleich der ersten relativen Position mit der zweiten relativen Position durchführen. Validierungsmittel validieren die Fahrzeug-zu-X-Botschaft bei Erkennen auf weitestgehende Übereinstimmung der ersten relativen Position mit der zweiten relativen Position und/oder verwerfen die Fahrzeug-zu-X-Botschaft bei Erkennen auf weitestgehende Abweichung der ersten relativen Position von der zweiten relativen Position. Das erfindungsgemäße System umfasst somit alle notwendigen Vorrichtungen zur Ausführung des erfindungsgemäßen Verfahrens und ermöglicht auf einfache Weise eine zuverlässige Validierung bzw. Verwerfung einer empfangenen Fahrzeug-zu-X-Botschaft. Daraus ergeben sich die bereits beschriebenen Vorteile.

Bevorzugt ist es vorgesehen, dass die unterschiedlichen Empfangscharakteristiken der mindestens zwei Antennenglieder durch eine voneinander beabstandete Anordnung und/oder durch eine unterschiedliche Orientierung und/oder durch eine unterschiedliche geometrische Ausformung und/oder durch eine unterschiedliche Abschattung der Antennenglieder erzeugt werden. Dies sind verschieden Möglichkeiten, welche einzeln oder in Kombination kontrolliert zu unterschiedlichen Empfangscharakteristiken der einzelnen Antennenglieder führen. Der Vorteil gegenüber den aus dem Stand der Technik bekannten Phasenmessungen einer einlaufenden Fahrzeug-zu-X-Botschaft besteht u.a. darin, dass die Antennenglieder aufgrund der solcherart erzeugten, unterschiedlichen Empfangscharakteristiken nur eine vergleichsweise geringe Distanz voneinander beabstandet sein müssen.

Weiterhin ist es bevorzugt, dass die Fahrzeug-zu-X-Kommunikationseinrichtung, die Auslesemittel, die Positionsbestimmungsmittel, die ersten Positionserrechnungsmittel, die zweiten Positionserrechnungsmittel, die Vergleichsmittel und/oder die Validierungsmittel einen gemeinsamen Chipsatz, insbesondere ein gemeinsames elektronisches Rechenwerk umfassen. Somit ergibt sich der Vorteil, dass nicht jede der genannten Vorrichtungen mit einem eigenen Rechenwerk versehen werden muss, was sowohl den Herstellungsprozess weiter vereinfacht als auch die Produktionskosten weiter reduziert. Durch den gemeinsamen Zugriff unterschiedlicher Vorrichtungen auf dasselbe Rechenwerk ergibt sich zudem eine effektive und schnelle Datenverknüpfung der Vorrichtungen.

Außerdem ist es vorteilhaft, dass die Fahrzeug-zu-X-Kommunikationseinrichtung auf Basis mindestens einer der folgenden Verbindungsarten kommuniziert:
- WLAN-Verbindung, insbesondere nach IEEE 802.11,
- ISM-Verbindung (Industrial, Scientific, Medical Band),
- Bluetooth-Verbindung,
- ZigBee-Verbindung,
- UWB-Verbindung (Ultra Wide Band),
- WiMax (Worldwide Interoperability for Microwave Access),
- Mobilfunkverbindung und
- Infrarotverbindung.

Diese Verbindungsarten bieten dabei unterschiedliche Vorteile, je nach Art, Wellenlänge und verwendetem Datenprotokoll. So ermöglichen einige der genannten Verbindungsarten z.B. eine vergleichsweise hohe Datenübertragungsrate und einen vergleichsweise schnellen Verbindungsaufbau, andere hingegen eignen sich weitestgehend sehr gut zur Datenübertragung um Sichthindernisse herum. Durch die Kombination und gleichzeitige bzw. parallele Nutzung mehrerer dieser Verbindungsarten ergeben sich weitere Vorteile, da so auch Nachteile einzelner Verbindungsarten ausgeglichen werden können.

Des Weiteren betrifft die vorliegende Erfindung eine Verwendung des Verfahrens zur Validierung einer Fahrzeug-zu-X-Botschaft in einem Fahrzeug, wie Auto, Bus oder Lastkraftwagen, oder aber auch in einem Schienenfahrzeug, einem Schiff, einem Luftfahrzeug, wie Helikopter oder Flugzeug, oder beispielsweise einem Fahrrad.

Weitere bevorzugte Ausführungsformen ergeben sich aus den Unteransprüchen und der nachfolgenden Beschreibung eines Ausführungsbeispiels an Hand von Figuren.

Es zeigt
- Fig. 1: eine aus zwei Antennengliedern bestehende Antennenanordnung,
- Fig. 2: ein Fahrzeug mit einer aus vier Antennengliedern bestehende Antennenanordnung,
- Fig. 3: ein Flussdiagramm, welches die einzelnen Ablaufschritte einer möglichen Ausführungsform des erfindungsgemäßen Verfahrens darstellt und
- Fig. 4: schematisch einen möglichen Aufbau des erfindungsgemäßen Systems.

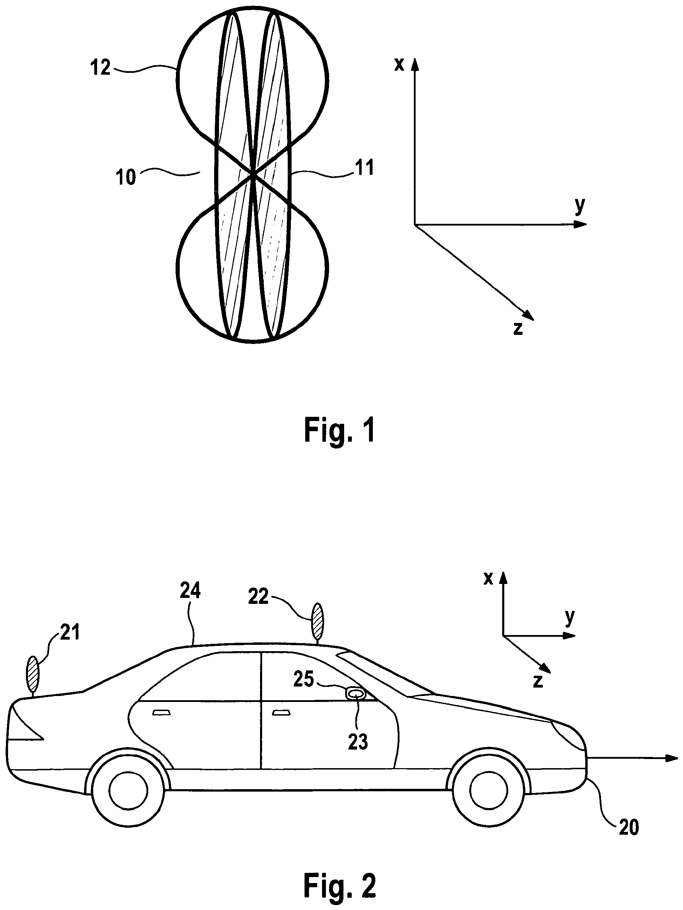

Fig. 1 zeigt Antennenanordnung 10, welche aus zwei Antennengliedern 11 und 12 besteht. Zur Veranschaulichung sind ebenfalls die Raumachsen eines karthesischen Koordinatensystems abgebildet. Antennenglied 12 ist parallel zu einer von der x-Achse und der y-Achse aufgespannten Ebene orientiert, während Antennenglied 11 parallel zu einer von der x-Achse und der z-Achse aufgespannten Ebene orientiert ist. Beide Antennenglieder 11 und 12 bestehen aus jeweils zwei im Wesentlichen kreisartig ausgeformten Halbgliedern, welche elektrisch direkt miteinander verbunden sind. Eine direkte elektrische Verbindung zwischen Antennengliedern 11 und 12 besteht hingegen nicht. Durch ihre unterschiedliche Orientierung besitzen Antennenglieder 11 und 12 unterschiedliche Empfangscharakteristiken für einlaufende Fahrzeug-zu-X-Botschaften, welche in Form elektromagnetischer Wellen übertragen werden. Die unterschiedlichen Empfangscharakteristiken resultieren in der Aufnahme unterschiedlicher Leistungsdichten derselben elektromagnetischen Welle durch Antennenglieder 11 und 12. Die Empfangscharakteristiken sind dabei wesentlich durch den Richtungswinkel der einlaufenden Fahrzeug-zu-X-Botschaft geprägt. Aufgrund seiner Orientierung parallel zur xy-Ebene weist Antennenglied 12 die beste Empfangscharakteristik für Fahrzeug-zu-X-Botschaften auf, welche parallel zur z-Achse auf Antennenglied 12 treffen. Antennenglied 11 hingegen weist orientierungsbedingt eine optimale Empfangscharakteristik für elektromagnetische Wellen auf, welche parallel zur y-Achse auf Antennenglied 11 treffen. Je besser die Empfangscharakteristik eines Antennenglieds gegenüber einer Fahrzeug-zu-X-Botschaft ist, desto größer ist die vom Antennenglied aus der elektromagnetischen Welle der Fahrzeug-zu-X-Botschaft aufgenommene Leistungsdichte.

Befindet sich nun ein Sender gemäß einem Ausführungsbeispiel in Fig. 1 in einer bestimmten Distanz senkrecht (in z-Richtung) vor Antennenanordnung 10 und sendet eine Fahrzeug-zu-X-Botschaft, so wird die elektromagnetische Welle der Fahrzeug-zu-X-Botschaft von Antennenglied 12 sehr deutlich empfangen (eine hohe Leistungsdichte wird aufgenommen), während Antennenglied 11 nur ein vergleichsweise schwaches Signal empfängt (eine geringe Leistungsdichte wird aufgenommen). Durch das Verhältnis der aufgenommenen Leistungsdichten wird nun erkannt, dass sich der Sender der Fahrzeug-zu-X-Botschaft senkrecht (in z-Richtung) vor oder hinter Antennenanordnung 10 befinden muss. Bei nur einmaligem Senden der Fahrzeug-zu-X-Botschaft ist mit gezeigter Antennenanordnung 10 keine weitere Richtungswinkelbestimmung des Senders möglich. Ebensowenig ist eine Bestimmung der Entfernung des Senders möglich. Dennoch kann der Empfänger die erhaltene Positionsinformation (Sender befindet sich in z-Richtung vor oder hinter Antennenanordnung 10) dazu nutzen, um die in der empfangenen Fahrzeug-zu-X-Botschaft enthaltene absolute Position mit den möglichen, errechneten Positionen zu vergleichen.

Gemäß einem weiteren Ausführungsbeispiel in Fig. 1 befindet sich ein Sender sowohl in z-Richtung als auch in y-Richtung eine bestimmte, gleiche Distanz (y=z) von Antennenanordnung 10 entfernt. In diesem Fall sind die Empfangscharakteristiken beider Antennenglieder 11 und 12 für die einlaufende Fahrzeug-zu-X-Botschaft identisch, wodurch auch die aufgenommene Leistungsdichte in beiden Antennengliedern identisch ist. Aus dem Verhältnis der aufgenommenen Leistungsdichten wird nun errechnet, dass es vier mögliche Richtungswinkel (nämlich alle vier Richtungswinkel in der yz-Ebene, die sich für y=z ergeben, ausgehend von einem Koordinatennullpunkt bei Antennenanordnung 10) gibt, bei denen sich der Sender befinden kann. Nach mehrmaligem Senden der Fahrzeug-zu-X-Botschaft von leicht unterschiedlichen Relativpositionen des Senders zum Empfängers, kann aus den vier möglichen Richtungswinkeln nach Auswerten des jeweils leicht unterschiedlichen Verhältnisses der aufgenommenen Leistungsdichten der tatsächliche Richtungswinkel bestimmt werden.

Fig. 2 zeigt Fahrzeug 20 mit einer aus drei Antennengliedern 21, 22, 23 sowie einem weiteren, von Fahrzeug 20 verdeckten und nicht dargestellten Antennenglied bestehenden Antennenanordnung. Die Fahrtrichtung von Fahrzeug 20 ist durch einen Pfeil dargestellt. Antennenglied 21 befindet sich am Heck von Fahrzeug 20 und ist derart orientiert, dass es die besten Empfangscharakteristiken aufweist für Fahrzeug-zu-X-Botschaften, die frontal oder rückwärtig auf Fahrzeug 20 treffen. Da Antennenglied 21 jedoch durch Dachaufbau 24 gegen aus Fahrtrichtung einlaufende Fahrzeug-zu-X-Botschaften abgeschattet ist, wird die Empfangscharakteristik trotz der Orientierung von Antennenglied 21 für aus Fahrtrichtung einlaufende Fahrzeug-zu-X-Botschaften verschlechtert. Antennenglied 22 befindet sich auf Dachaufbau 24 von Fahrzeug 20 und ist, genauso wie Antennenglied 21, derart orientiert, dass die Empfangscharakteristiken für frontal oder rückwärtig einlaufende Fahrzeug-zu-X-Botschaften optimal sind. Durch die Anordnung auf Fahrzeugdach 24 ist Antennenglied 22 zudem gegen keinen Richtungswinkel abgeschattet. Antennenglied 23 befindet sich in rechtem Außenspiegel 25 und besitzt eine Orientierung, welche für von links und rechts (in Fahrtrichtung blickend) einlaufende Fahrzeug-zu-X-Botschaften die besten Empfangscharakteristiken aufweist. Da Antennenglied 23 jedoch durch Fahrzeug 20 gegen von links einlaufende Fahrzeug-zu-X-Botschaften abgeschattet ist, ist ausschließlich die Empfangscharakteristik für von rechts einlaufende Fahrzeug-zu-X-Botschaften optimal. Ein weiteres, nicht dargestelltes Antennenglied befindet sich im linken Außenspiegel von Fahrzeug 20 und besitzt (analog zu Antennenglied 23 in rechtem Außenspiegel 25) durch seine Orientierung sowie die Abschattung durch Fahrzeug 20 eine optimale Empfangscharakteristik für von links einlaufende Fahrzeug-zu-X-Botschaften.

Gemäß einem Ausführungsbeispiel empfängt Fahrzeug 20 in Fig. 2 eine Fahrzeug-zu-X-Botschaft von einem nicht dargestellten Folgefahrzeug, welches sich in Fahrtrichtung blickend hinter Fahrzeug 20 befindet. Die einlaufende Fahrzeug-zu-X-Botschaft wird sowohl von Antennenglied 21 als auch von Antennenglied 22 deutlich empfangen, was bedeutet, dass sowohl von Antennenglied 21 als auch von Antennenglied 22 eine hohe Leistungsdichte aufgenommen wird. Antennenglied 23 in rechtem Außenspiegel 25 und das nicht dargestellte Antennglied im linken Außenspiegel verfügen über weniger gute Empfangscharakteristiken für von hinten einlaufende Fahrzeug-zu-X-Botschaften und nehmen daher nur eine geringere Leistungsdichte auf. Aus dem Verhältnis der aufgenommenen Leistungsdichten zueinander wird nun zunächst errechnet, dass sich der Sender hinter Fahrzeug 20 befinden muss. Mit dieser Information wird nun der richtungswinkelabhängige, der abschattungsabhängige und der von der geometrischen Ausformung der Antennenglieder abhängige Anteil der Empfangscharakteristiken aus den einzelnen, aufgenommenen Leistungsdichten herausgerechnet. Die sich dann ergebenden Verhältnisse der aufgenommenen Leistungsdichten sind nur noch von der Entfernung des Senders zu den einzelnen Antennengliedern der Antennenanordnung geprägt. Somit wird nun aus dem Verhältnis der solcherart bereinigten Leistungsdichten die Entfernung des Senders bestimmt.

In einem weiteren Ausführungsbeispiel in Fig. 2 empfängt Fahrzeug 20 eine aus Fahrtrichtung frontal einlaufende Fahrzeug-zu-X-Botschaft. Aufgrund der beschriebenen Orientierungen und Abschattungen der einzelnen Antennenglieder besitzen diese unterschiedliche Empfangscharakteristiken gegenüber der einlaufenden Fahrzeug-zu-X-Botschaft. Antennenglied 22 nimmt entsprechend eine hohe Leistungsdichte auf, während Antennenglieder 21 und 23 sowie das nicht dargestellte Antennenglied im linken Außenspiegel nur eine vergleichsweise geringe Leistungsdichte aufnehmen. Auf Basis des Verhältnisses der Leistungsdichten wird nun zunächst aus einem Referenzkennfeld ausgelesen, dass sich der Sender in Fahrtrichtung voraus befindet. In einem weiteren Schritt wird unter Berücksichtigung des Richtungswinkels die Entfernung zum Sender aus dem Referenzkennfeld ausgelesen.

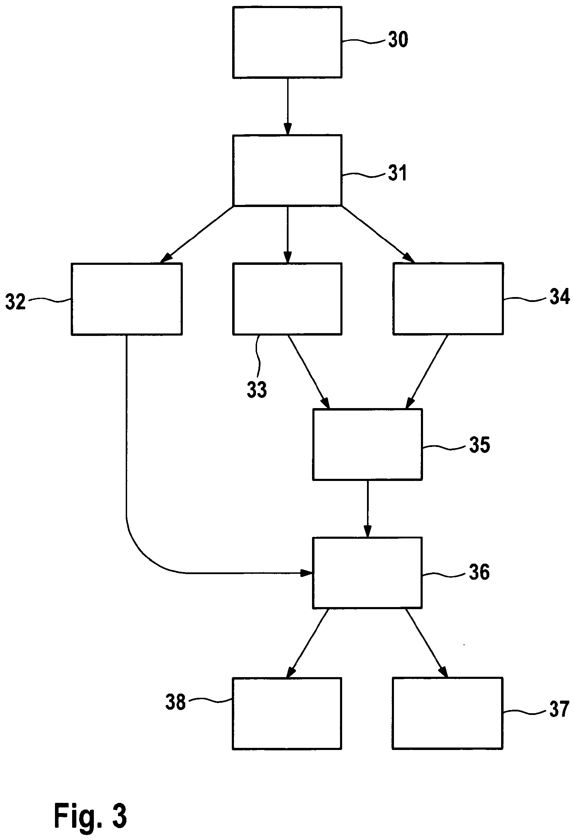

Fig. 3 zeigt ein Flussdiagramm, welches die einzelnen Ablaufschritte einer möglichen Ausführungsform des erfindungsgemäßen Verfahrens darstellt. In Schritt 30 wird eine Fahrzeug-zu-X-Botschaft über eine Antennenanordnung einer Fahrzeug-zu-X-Kommunikationseinrichtung empfangen, wobei die Antennenanordnung über mindestens zwei elektrisch getrennte Antennenglieder verfügt. In Schritt 31 werden die aus der elektromagnetischen Welle der Fahrzeug-zu-X-Botschaft heraus aufgenommenen Leistungsdichten in den einzelnen Antennengliedern erfasst und zueinander in Verhältnis gesetzt. In Schritt 33 wird die absolute Position des Empfängers mittels eines GPS-Systems bestimmt und in Schritt 34 wird die in der empfangenen Fahrzeug-zu-X-Botschaft enthaltene, absolute Position des Senders ausgelesen. Mittels der aus der Fahrzeug-zu-X-Botschaft ausgelesenen, absoluten Position des Senders und der bestimmten, absoluten Position des Empfängers wird im folgenden Schritt 35 die erste relative Position des Senders zum Empfänger errechnet. In Schritt 32 wird aus dem in Schritt 31 erfassten Verhältnis der Leistungsdichten die zweite relative Position des Senders zum Empfänger errechnet. Ein Vergleich der ersten relativen Position mit der zweiten relativen Position findet in Schritt 36 statt. Sofern die erste relative Position und die zweite relative Position weitestgehend übereinstimmen, wird die Fahrzeug-zu-X-Botschaft in Schritt 37 validiert. Falls der Vergleich jedoch eine weitestgehende Abweichung der beiden relativen Positionen ergibt, wird die Fahrzeug-zu-X-Botschaft in Schritt 38 verworfen.

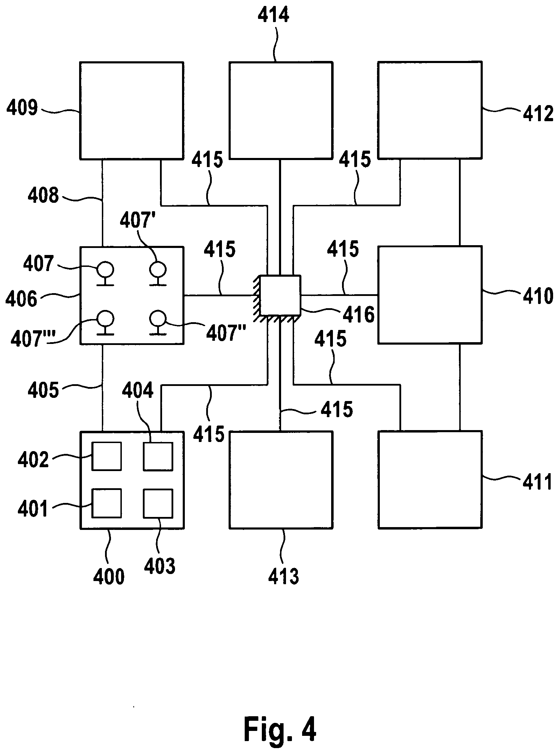

In Fig. 4 ist schematisch ein möglicher Aufbau des erfindungsgemäßen Systems zur Validierung einer Fahrzeug-zu-X-Botschaft dargestellt. Das System besteht aus Fahrzeug-zu-X-Kommunikationseinrichtung 400, welche über WLAN-Verbindungsmittel 401, ISM-Verbindungsmittel 402, Mobilfunkverbindungsmittel 403 und Infrarotverbindsmittel 404 auf Basis eines infrarotfähigen Zündschlüssels verfügt. Über Datenleitung 405 ist Fahrzeug-zu-X-Kommunikationseinrichtung 400 mit Antennenanordnung 406 verbunden, die ihrerseits vier Antennenglieder 407, 407', 407" und 407''' umfasst. Über weitere Datenleitung 408 ist Antennenanordnung 406 außerdem mit zweiten Positionserrechnungsmitteln 409 verbunden. Fahrzeug-zu-X-Kommunikationseinrichtung 400 empfängt und versendet Fahrzeug-zu-X-Botschaften über Antennenanordnung 406 und zweite Positionserrechnungsmitteln 409 bilden das Verhältnis der in Antennengliedern 407, 407', 407" und 407"' aufgenommenen Leistungsdichten und errechnen daraus die zweite relative Position des Senders zum Empfänger. Auslesemittel 410 lesen aus einer empfangenen Fahrzeug-zu-X-Botschaft die darin enthaltene absolute GPS-Position des Senders aus und Positionsbestimmungsmittel 411 bestimmen die eigene absolute GPS-Position des Empfängers. Von ersten Positionserrechnungsmitteln 412 wird aus der absoluten GPS-Position des Senders und der absoluten GPS-Position des Empfängers die erste relative Position des Senders zum Empfänger errechnet. Die beiden errechneten relativen Positionen werden von Vergleichsmitteln 413 miteinander verglichen. Abhängig vom Vergleichsergebnis wird die empfangene Fahrzeug-zu-X-Botschaft bei im Wesentlichen übereinstimmendem Vergleichsergebnis von Validierungsmitteln 414 validiert bzw. bei im Wesentlichen nicht übereinstimmendem Vergleichsergebnis verworfen. Alle der genannten Vorrichtungen, Anordnungen und Mittel sind zudem über Datenleitungen 415 mit Mikroprozessor 416 gekoppelt, welcher Rechenoperationen für alle der genannten Vorrichtungen, Anordnungen und Mittel ausführt. Die gemeinsame Verwendung und der gemeinsame Zugriff auf Mikroprozessor 416 erlauben einen schnellen und effektiven Datenaustausch der genannten Vorrichtungen, Anordnungen und Mittel untereinander. Zudem hilft die gemeinsame Verwendung von Mikroprozessor 416, den Gesamtkostenaufwand des Systems zu reduzieren.

## Patentansprüche

1. Verfahren zur Validierung einer Fahrzeug-zu-x-Botschaft,
- wobei die Fahrzeug-zu-X-Botschaft eine absolute Position eines Senders umfasst,
- wobei eine absolute Position eines Empfängers auf Basis eines globalen Satellitennavigationsverfahrens und/oder auf Basis eines Kartenabgleichs bestimmt wird,
- wobei aus der absoluten position des Empfängers und der absoluten Position des Senders eine erste relative Position des Senders zum Empfänger errechnet wird,
- wobei ein Vergleich der ersten relativen Position mit einer zweiten relativen Position durchgeführt wird und wobei bei Erkennen auf weitestgehende Übereinstimmung der ersten relativen Position mit der zweiten relativen position die Fahrzeug-zu-X-Botschaft validiert wird und/oder bei Erkennen auf weitestgehende Abweichung der ersten relativen Position von der zweiten relativen Position die Fahrzeug-zu-X-Botschaft verworfen wird,
**dadurch gekennzeichnet,**
- **dass** die Fahrzeug-zu-X-Botschaft von einer mindestens zwei Antennenglieder (407, 407', 407", 4a7"') aufweisenden Antennenanordnung (10, 406) einer Fahrzeug-zu-X-Kommunikationseinrichtung (400) empfangen wird,
- wobei eine elektromagnetische Feldstärke der Fahrzeug-zu-X-Botschaft aufgrund unterschiedlicher Empfangscharakteristiken der mindestens zwei Antennenglieder (407, 407', 407", 407''') von den mindestens zwei Antennengliedern (407, 407', 407", 407''') mit unterschiedlichen Leistungsdichten aufgenommen wird und
- wobei empfängerseitig aus dem Verhältnis der von den mindestens zwei Antennengliedern (407, 407', 407", 407''') der Antennenanordnung (10, 406) aufgenommenen Leistungsdichten die zweite relative Position des Senders zum Empfänger errechnet oder aus einem Referenzkennfeld ausgelesen wird.

2. Verfahren nach Anspruch 1,
**dadurch gekennzeichnet,**
**dass** die Empfangscharakteristiken der mindestens zwei Antennenglieder (407, 407', 407", 407''') von einem Richtungswinkel des Empfängers zum Sender geprägt sind.

3. Verfahren nach mindestens einem der Ansprüche 1 oder 2,
**dadurch gekennzeichnet,**
**dass** aus dem Verhältnis der von den mindestens zwei Antennengliedern (407, 407', 407", 407''') aufgenommenen Leistungsdichten der Richtungswinkel des Empfängers zum Sender errechnet wird oder aus dem Referenzkennfeld ausgelesen wird und wobei weiterhin aus dem Verhältnis der von den mindestens zwei Antennengliedern (407, 407', 407", 407''') aufgenommenen Leistungsdichten unter Berücksichtigung des Richtungswinkels des Empfängers zum Sender die Entfernung des Empfängers zum Sender errechnet wird oder aus dem Referenzkennfeld ausgelesen wird.

4. Verfahren nach mindestens einem der Ansprüche 1 bis 3,
**dadurch gekennzeichnet,**
**dass** das Referenzkennfeld eine Vielzahl von Verhältnissen der aufgenommenen Leistungsdichten in den mindestens zwei Antennengliedern (407, 407', 407", 407''') in Abhängigkeit einer Vielzahl von Richtungswinkeln und Entfernungen des Empfängers zum Sender umfasst.

5. Verfahren nach mindestens einem der Ansprüche 1, bis 4,
**dadurch gekennzeichnet,**
**dass** absolute Positionen und/oder relative Positionen und/oder Geschwindigkeiten und/oder Bewegungsrichtungen einer Vielzahl von sich in Sendereichweite zum Empfänger befindlichen Sendern bestimmt werden, wobei insbesondere ein Umfeldmodell der Sender erstellt wird.

6. Verfahren nach mindestens einem der Ansprüche 1 bis 5,
**dadurch gekennzeichnet,**
**dass** die ersten relativen Positionen und die zweiten relativen Positionen einer Vielzahl von sich in Sendereichweite zum Empfänger befindlichen Sendern in Relation gesetzt werden und zu einer Bildung eines statistischen mittleren Verhaltens herangezogen werden und wobei Fahrzeug-zu-X-Botschaften mit einem mit dem statistischen mittleren Verhalten weitestgehend übereinstimmenden Verhalten validiert werden und/oder Fahrzeug-zu-X-Botschaften mit einem vom statistischen mittleren Verhalten weitestgehend abweichenden Verhalten verworfen werden.

7. Verfahren nach mindestens einem der Ansprüche 1 bis 6,
**dadurch gekennzeichnet,**
**dass** ein zeitlicher Verlauf der unterschiedlichen aufgenommenen Leistungsdichten ausgewertet wird.

8. Verfahren nach Anspruch 7,
**dadurch gekennzeichnet,**
**dass** aus dem zeitlichen Verlauf eine Bewegungsrichtung und/oder eine Geschwindigkeit des Senders errechnet wird.

9. Verfahren nach mindestens einem der Ansprüche 1 bis 8,
dadurch gekennzeichet,
dass ein Informationsinhalt einer validierten Fahrzeug-zu-X-Botschaft mindestens einem Fahrerassistenzsystem zur Verfügung gestellt wird, wobei das mindestens eine Fahrerassistenzsystem zur Bewarnung eines Fahrers und/oder zum Eingreifen in die Fahrzeugsteuerung und/oder zum Übersteuern einer Fahrervorgabe ausgebildet ist.

10. Verfahren nach mindestens einem der Ansprüche 1 bis 9,
**dadurch gekennzeichnet,**
**dass** anstelle eines Vergleichs der ersten relativen Position mit der zweiten relativen Position ein Vergleich der von der Fahrzeug-zu-X-Botschaft umfassten absoluten Position des Senders mit einer aus der absoluten Position des Empfängers und der zweiten relativen position des Senders zum Empfänger errechneten absoluten Position des Senders durchgeführt wird.

11. System zur Validierung einer Fahrzeug-zu-X-Botschaft, insbesondere zur Ausführung des Verfahrens nach mindestens einem der Ansprüche 1 bis 10,
umfassend eine Fahrzeug-zu-X-Kommunikationseinrichtung (400) zum Empfangen und Versenden von Fahrzeug-zu-X-Botschaften,
weiterhin umfassend Auslesemittel (410) zum Auslesen einer absoluten Position des Senders aus einer empfangenen Fahrzeug-zu-X-Botschaft,
Positionsbestimmungsmittel (411) auf Basis eines globalen Satellitennavigationssystems und/oder auf Basis eines Kartenabgleichsystems zum Bestimmen einer absolute Position eines Empfängers und
erste Positionserrechnungsmittel (412) zum Errechnen einer ersten relativen Position des Senders zum Empfänger aus der absoluten Position des Empfängers und der absoluten Position des Senders,
wobei Vergleichsmittel (413) einen Vergleich der ersten relativen Position mit einer zweiten relativen Position durchführen und wobei Validierungsmittel (414) bei Erkennen auf weitestgehende Übereinstimmung der ersten relativen Position mit der zweiten relativen Position die Fahrzeug-zu-X-Botschaft validieren und/oder bei Erkennen auf weitestgehende Abweichung der ersten relativen Position von der zweiten relativen Position die Fahrzeug-zu-X-Botschaft verwerfen,
**dadurch gekennzeichnet,**
**dass** der Fahrzeug-zu-X-Kommunikationseinrichtung (400) eine mindestens zwei Antennenglieder (407, 407', 407", 407''') aufweisende Antennenanordnung (10, 406) zugeordnet ist,
wobei jedes Antennenglied (407, 407', 407", 407''') gegenüber einer Position eines Senders unterschiedliche Empfangscharakteristiken aufweist,
wobei jedes Antennenglied (407, 407', 407", 407''') aufgrund der unterschiedlichen Empfangscharakteristiken eine elektromagnetische Feldstärke einer einlaufenden Fahrzeug-zu-X-Botschaft mit unterschiedlichen Leistungsdichten aufnimmt und
wobei zweite Positionserrechnungsmittel (409) aus dem Verhältnis der in den mindestens zwei Gliedern der Antennenanordnung aufgenommenen Leistungsdichten die zweite relative Position des Senders zum Empfänger errechnen oder aus einem Referenzkennfeld auslesen.

12. System nach Anspruch 11,
**dadurch gekennzeichnet,**
**dass** die unterschiedlichen Empfangscharakteristiken der mindestens zwei Antennenglieder (407, 407', 407", 407''') durch eine voneinander beabstandete Anordnung und/oder durch eine unterschiedliche Orientierung und/oder durch eine unterschiedliche geometrische Ausformung und/oder durch eine unterschiedliche Abschattung der Antennenglieder (407, 407', 407", 407''') erzeugt werden.

13. System nach mindestens einem der Ansprüche 11 oder 12,
**dadurch gekennzeichnet,**
**dass** die Fahrzeug-zu-X-Kommunikationseinrichtung (400), die Auslesemittel (410), die Positionsbestimmungsmittel (411), die ersten Positionserrechnungsmittel (412), die zweiten Positionserrechnungsmittel (409), die Vergleichsmittel (413) und/oder die Validierungsmittel (414) einen gemeinsamen Chipsatz, insbesondere ein gemeinsames elektronisches Rechenwerk (416) umfassen.

14. System nach mindestens einem der Ansprüche 11 bis 13,
**dadurch gekennzeichnet,**
**dass** die Fahrzeug-zu-X-Kommunikationseinrichtung (400) auf Basis mindestens einer der folgenden Verbindungsarten kommuniziert:
- WLAN-Verbindung (401), insbesondere nach IEEE 802.11,
- ISM-Verbindung (Industrial, Scientific, Medical Band) (402),
- Bluetooth-Verbindung,
- ZigBee-Verbindung,
- UWB-Verbindung (Ultra Wide Band),
- WiMax (Worldwide Interoperability for Microwave Access),
- Mobilfunkverbindung (403) und
- Infrarotverbindung (404).

15. Verwendung des Verfahrens nach mindestens einem der Ansprüche 1 bis 10 in einem Fahrzeug.

## Claims

1. A method for validating a vehicle-to-X message,
- wherein the vehicle-to-X message comprises an absolute position of a transmitter,
- wherein an absolute position of a receiver is determined on the basis of a global satellite navigation method and/or on the basis of a map comparison,
- wherein a first relative position of the transmitter with respect to the receiver is calculated from the absolute position of the receiver and the absolute position of the transmitter,
- wherein a comparison of the first relative position with a second relative position is performed and wherein the vehicle-to-X message is validated on detecting a most extensive correspondence of the first relative position with the second relative position, and/or the vehicle-to-X message is rejected on detecting a most extensive deviation of the first relative position from the second relative position,
**characterized in that**
- the vehicle-to-X message is received by an antenna arrangement (10, 406) having at least two antenna elements (407, 407', 407", 407"') of a vehicle-to-X communication device (400),
- wherein an electromagnetic field strength of the vehicle-to-X message is picked up with different power densities by the at least two antenna elements (407, 407', 407", 407"') due to the different reception characteristics of the at least two antenna elements (407, 407', 407", 407"'), and
- wherein at the receiver end, the second relative position of the transmitter with respect to the receiver is calculated or is read out of a reference characteristic map from the ratio of the power densities picked up by the at least two antenna elements (407, 407', 407", 407"') of the antenna arrangement (10, 406).

2. The method according to Claim 1,
**characterized in that**
the reception characteristics of the at least two antenna elements (407, 407', 407", 407"') are formed by a directional angle of the receiver with respect to the transmitter.

3. The method according to at least one of Claims 1 or 2, **characterized in that**
the directional angle of the receiver with respect to the transmitter is calculated or read out of the reference characteristic map from the ratio of the power densities picked up by the at least two antenna elements (407, 407', 407", 407"'), and wherein furthermore the distance of the receiver from the transmitter is calculated or read out of the reference characteristic map from the ratio of the power densities picked up by the at least two antenna elements (407, 407', 407", 407"'), taking into consideration the directional angle of the receiver with respect to the transmitter.

4. The method according to at least one of Claims 1 to 3, **characterized in that**
the reference characteristic map comprises a multiplicity of ratios of the power densities picked up in the at least two antenna elements (407, 407', 407", 407"') in dependence on a multiplicity of directional angles and distances of the receiver with respect to the transmitter.

5. The method according to at least one of Claims 1 to 4, **characterized in that** absolute positions and/or relative positions and/or speeds and/or directions of movement of a multiplicity of transmitters located within transmitting range from the receiver are determined, wherein an environment model of the transmitters is in particular generated.

6. The method according to at least one of Claims 1 to 5, **characterized in that**
the first relative positions and the second relative positions of a multiplicity of transmitters located within transmitting range from the receiver are placed in relation and are utilized for forming a statistical mean behavior and wherein vehicle-to-X messages having a behavior which most extensively corresponds to the statistical mean behavior are validated and/or vehicle-to-X messages having a behavior most extensively deviating from the statistical mean behavior are rejected.

7. The method according to at least one of Claims 1 to 6, **characterized in that**
a variation with time of the different power densities picked up is evaluated.

8. The method according to Claim 7, **characterized in that**
a direction of movement and/or a speed of the transmitter is calculated from the variation with time.

9. The method according to at least one of Claims 1 to 8, **characterized in that**
an information content of a validated vehicle-to-X message is provided to at least one driver assistance system, wherein the at least one driver assistance system is configured to warn a driver and/or to intervene in the vehicle control and/or to override a driver input.

10. The method according to at least one of Claims 1 to 9, **characterized in that**,
instead of a comparison of the first relative position with the second relative position, a comparison of the absolute position of the transmitter comprised by the vehicle-to-X message with an absolute position of the transmitter calculated from the absolute position of the receiver and the second relative position of the transmitter with respect to the receiver is performed.

11. A system for validating a vehicle-to-X message, in particular for carrying out the method according to at least one of Claims 1 to 10,
comprising a vehicle-to-X communication device (400) for receiving and sending vehicle-to-X messages,
further comprising reading-out means (410) for reading an absolute position of the transmitter out of a received vehicle-to-X message,
position determining means (411) based on a global satellite navigation system and/or based on a map comparison system for determining an absolute position of a receiver, and first position calculating means (412) for calculating a first relative position of the transmitter with respect to the receiver from the absolute position of the receiver and the absolute position of the transmitter,
wherein comparison means (413) perform a comparison of the first relative position with a second relative position and wherein validation means (414) validate the vehicle-to-X message on detecting a most extensive correspondence of the first relative position with the second relative position and/or reject the vehicle-to-X message on detecting a most extensive deviation of the first relative position from the second relative position,
**characterized in that**
an antenna arrangement (10, 406) having at least two antenna elements (407, 407', 407", 407"') is assigned to the vehicle-to-X communication device (400),
wherein each antenna member (407, 407', 407", 407"') has different reception characteristics with respect to a position of a transmitter,
wherein each antenna member (407, 407', 407", 407"') picks up an electromagnetic field strength of the vehicle-to-X message with different power densities due to the different reception characteristics, and
wherein second position calculating means (409) calculate, or read out of a reference characteristic map, the second relative position of the transmitter with respect to the receiver from the ratio of the power densities picked up in the at least two elements of the antenna arrangement.

12. The system according to Claim 11,
**characterized in that**
the different reception characteristics of the at least two antenna elements (407, 407', 407", 407"') are generated by a spaced apart arrangement and/or by a different orientation and/or by a different geometric construction and/or by a different shading of the antenna elements (407, 407', 407", 407'").

13. The system according to at least one of Claims 11 or 12, **characterized in that**
the vehicle-to-X communication device (400), the reading-out means (410), the position determining means (411), the first position calculating means (412), the second position calculating means (409), the comparison means (413) and/or the validation means (414) comprise a common chip set, in particular a common electronic calculating unit (416).

14. The system according to at least one of Claims 11 to 13, **characterized in that**
the vehicle-to-X communication device (400) communicates on the basis of at least one of the following types of connection:
- WLAN connection (401), in particular according to IEEE 802.11
- ISM (Industrial, Scientific, Medical Band) connection (402),
- Bluetooth connection,
- ZigBee connection,
- UWB (Ultra Wide Band) connection,
- WiMax (Worldwide Interoperability for Microwave Access),
- Mobile radio connection (403), and
- Infrared connection (404).

15. Use of the method according to at least one of Claims 1 to 10 in a vehicle.

## Revendications

1. Procédé pour valider un message de véhicule à X,
- le message de véhicule à X comprenant une position absolue d'un émetteur,
- une position absolue d'un récepteur étant déterminée sur la base d'un procédé global de navigation par satellite et/ou sur la base d'une comparaison de carte,
- une première position relative de l'émetteur par rapport au récepteur étant calculée à partir de la position absolue du récepteur et de la position absolue de l'émetteur,
- une comparaison de la première position relative avec une deuxième position relative étant effectuée et, lorsque la correspondance la plus grande possible entre la première position relative et la deuxième position relative est constatée, le message de véhicule à X étant validé et/ou, lorsque l'écart le plus grand possible entre la première position relative et la deuxième position relative est constatée, le message de véhicule à X étant rejeté,
**caractérisé en ce que**
- le message de véhicule à X est reçu par un arrangement d'antennes (10, 406) d'une installation de communication de véhicule à X (400) présentant au moins deux membres d'antennes (407, 407', 407", 407"'),
- une intensité de champ électromagnétique du message de véhicule à X étant enregistrée avec des densités de puissance différentes par les au moins deux membres d'antennes (407, 407', 407", 407"'), en raison de caractéristiques de réception différentes des au moins deux membres d'antenne (407, 407', 407", 407"'), et
- du côté du récepteur, la deuxième position relative de l'émetteur par rapport au récepteur est calculée ou lue sur un diagramme caractéristique de référence, à partir du rapport des intensités de puissance enregistrées par les au moins deux membres d'antennes (407, 407', 407", 407"') de l'arrangement d'antennes (10, 406).

2. Procédé selon la revendication 1,
**caractérisé en ce qu'**
un angle d'azimut entre le récepteur et l'émetteur contribue à déterminer les caractéristiques de réception des au moins deux membres d'antennes (407, 407', 407", 407"').

3. Procédé selon au moins l'une des revendications 1 ou 2, **caractérisé en ce que** l'angle d'azimut entre le récepteur et l'émetteur est calculé ou est lu sur le diagramme caractéristique de référence à partir du rapport des intensités de puissance enregistrées par les au moins deux membres d'antennes (407, 407', 407", 407"'), et en outre, la distance du récepteur à l'émetteur étant calculée ou étant lue sur le diagramme caractéristique de référence à partir du rapport des intensités de puissance enregistrées par les au moins deux membres d'antennes (407, 407', 407", 407"'), en tenant compte de l'angle d'azimut entre le récepteur et l'émetteur.

4. Procédé selon au moins l'une des revendications 1 à 3, **caractérisé en ce que** le diagramme caractéristique de référence comprend une multiplicité de rapports d'intensités de puissance enregistrées par les au moins deux membres d'antennes (407, 407', 407", 407"') en fonction d'une multiplicité d'angles d'azimut et de distances entre le récepteur et l'émetteur.

5. Procédé selon au moins l'une des revendications 1 à 4, **caractérisé en ce que** des positions absolues et/ou relatives et/ou des vitesses et/ou des sens de déplacement d'une multiplicité d'émetteurs se trouvant à portée de transmission du récepteur sont déterminés, un modèle d'environnement des émetteurs étant généré, en particulier.

6. Procédé selon au moins l'une des revendications 1 à 5, **caractérisé en ce que** les premières positions relatives et les deuxièmes positions relatives d'une multiplicité d'émetteurs se trouvant à portée de transmission du récepteur sont mises en relation et sont utilisées pour une formation d'un comportement statistique moyen, les messages de véhicule à X avec un comportement concordant le plus possible avec le comportement statistique moyen étant validés et/ou les messages de véhicule à X avec un comportement s'écartant le plus possible du comportement statistique moyen étant rejetés.

7. Procédé selon au moins l'une des revendications 1 à 6, **caractérisé en ce que** un déroulement temporel des différentes intensités de puissance enregistrées est analysé.

8. Procédé selon la revendication 7,
**caractérisé en ce que**
un sens de déplacement et/ou une vitesse de l'émetteur sont calculés à partir du déroulement temporel.

9. Procédé selon au moins l'une des revendications 1 à 8, **caractérisé en ce qu'** un contenu d'information d'un message de véhicule à X validé est mis à disposition d'au moins un système d'assistance au conducteur, l'au moins un système d'assistance au conducteur étant formé pour l'avertissement d'un conducteur et/ou pour intervenir au niveau du pilotage du véhicule et/ou pour prendre la priorité sur une consigne du conducteur.

10. Procédé selon au moins l'une des revendications 1 à 9, **caractérisé en ce que**, au lieu d'une comparaison entre la première position relative et la deuxième position relative, une comparaison entre la position absolue comprise par le message de véhicule à X de l'émetteur et une position absolue de l'émetteur calculée à partir de la position absolue du récepteur et de la deuxième position relative de l'émetteur par rapport au récepteur est effectuée.

11. Système pour la validation d'un message de véhicule à X, en particulier pour l'exécution d'un procédé selon au moins l'une des revendications 1 à 10,
comprenant une installation de communication de véhicule à X (400) pour la réception et l'émission de messages de véhicule à X,
comprenant en outre un moyen de lecture (410) pour la lecture d'une position absolue de l'émetteur à partir d'un message de véhicule à X reçu,
des moyens de détermination de position (411) sur la base d'un système global de navigation par satellite et/ou sur la base d'une comparaison de carte, pour la détermination d'une position absolue d'un récepteur, et
des premiers moyens de calcul de position (412) pour le calcul d'une première position relative de l'émetteur par rapport au récepteur à partir de la position absolue du récepteur et de la position absolue de l'émetteur,
des moyens de comparaison (413) effectuant une comparaison de la première position relative avec une deuxième position relative et des moyens de validation (414) validant le message de véhicule à X lorsque la correspondance la plus grande possible entre la première position relative et la deuxième position relative est constatée et/ou rejetant le message de véhicule à X lorsque l'écart le plus grand possible entre la première position relative et la deuxième position relative est constaté,
**caractérisé en ce que**
un arrangement d'antennes (10, 406) présentant au moins deux membres d'antennes (407, 407', 407", 407"') étant attribué à l'installation de communication de véhicule à X (400),
chaque membre d'antenne (407, 407', 407", 407"') présentant différentes caractéristiques de réception vis-à-vis de la position
d'un émetteur,
chaque membre d'antennes (407, 407', 407", 407"') enregistrant avec des densités de puissance différentes une intensité de champ électromagnétique d'un message de véhicule à X entrant en raison de caractéristiques de réception différentes, et
des deuxièmes moyens de calcul de position (409) calculant la deuxième position relative de l'émetteur ou la lisant à partir d'un diagramme caractéristique de référence, à partir du rapport des intensités de puissance enregistrées par les au moins deux membres de l'arrangement d'antennes.

12. Système selon la revendication 11,
**caractérisé en ce que**
les différentes caractéristiques de réception des au moins deux membres d'antennes (407, 407', 407", 407"') sont générées par un arrangement à distance l'une de l'autre et/ou par une orientation différente et/ou par une conformation géométrique différente et/ou par un effet d'ombre différent des membres d'antennes (407, 407', 407", 407"').

13. Système selon au moins l'une des revendications 11 ou 12, **caractérisé en ce que**
l'installation de communication de véhicule à X (400), les moyens de lecture (410), les moyens de détermination de position (411), les premiers moyens de calcul de position (412), les deuxièmes moyens de calcul de position (409), les moyens de comparaison (413) et/ou les moyens de validation (414) comprennent un premier chipset commun, en particulier une unité de calcul électronique (416).

14. Système selon au moins l'une des revendications 11 à 13, **caractérisé en ce que**
l'installation de communication de véhicule à X (400) communique sur la base d'au moins un des modes de connexion suivants :
- connexion WLAN (401), en particulier conformément à
- IEEE 802.11
- connexion ISM (bandes industrielle, scientifique, médicale) (402),
- connexion Bluetooth,
- connexion ZigBee,
- connexion ULB (bande ultra-large),
- WiMAX (Worldwide Interoperability for Microwave Access),
- connexion par téléphonie mobile (403) et
- connexion infrarouge (404).

15. Utilisation du procédé selon au moins l'une des revendications 1 à 10 dans un véhicule.
